# EUROPEAN PATENT APPLICATION

(11) **EP 2 391 029 A1**
(43) Date of publication of application: **30.11.2011**
(21) Application number: 09838800.2
(22) Date of filing: 23.01.2009
(51) Int. Cl.: H04B 1/59, G06K 17/00, G06K 19/07

(54) **DATA READ/WRITE DEVICE FOR ACTIVE TAG DEVICE, ACTIVE TAG DEVICE AND SYSTEM**

(71) Applicant: Fujitsu Limited, Kawasaki-shi, Kanagawa 211-8588 (JP)
(72) Inventor: ITASAKI, Akira, Kawasaki-shi Kanagawa 211-8588 (JP); YAMADA, Isamu, Kawasaki-shi Kanagawa 211-8588 (JP); SHIOTSU, Shinichi, Kawasaki-shi Kanagawa 211-8588 (JP); INANO, Satoshi, Kawasaki-shi Kanagawa 211-8588 (JP); TANAKA, Hideki, Kawasaki-shi Kanagawa 211-8588 (JP); YAMASHITA, Daisuke, Kawasaki-shi Kanagawa 211-8588 (JP); MATSUI, Kazuki, Kawasaki-shi Kanagawa 211-8588 (JP); SUGANO, Hiroyasu, Kawasaki-shi Kanagawa 211-8588 (JP)
(74) Representative: Stebbing, Timothy Charles
(86) International application number: PCT/JP2009/051118
(87) International publication number: WO 2010/084609

(57) **Abstract**

An active tag device includes: a wireless communication unit to communicate with the data reading writing apparatus wirelessly; and a controller to cause the wireless communication unit to carry out data transmission at intervals of a first period, and to cause to start measurement of a second period set for determining a timing for causing the wireless communication unit to carry out carrier sense to detect data output by the data reading writing apparatus, synchronously with the data transmission, and to cause the wireless communication unit to carry out the carrier sense after the second period elapsed. The data reading writing apparatus includes: a wireless communication unit to carry out wireless communication with the active tag device; and a controller to cause to start measurement of the first period set for synchronizing with carrier sense of the active tag device after the wireless communication unit detected reception of data from the active tag device, and to cause the wireless communication unit to carry out data transmission to the active tag device during the second period after the first period elapsed.

## Description

### Technical Field

This technique relates to an active tag device that can transmit and receive data, data reading writing apparatus that transmits and receives data for the active tag device and system thereof.

### Background Technology

An active tag device is a kind of wireless IC tag (RFID), and is a type of IC tag that contains a battery and can communicate distance of dozens of meters apart. A conventional active tag device can merely transmit data for a reader writer apparatus (i.e. data reading writing apparatus) but cannot receive data. However, recently, an active tag device that can transmit and receive data is making its appearance.

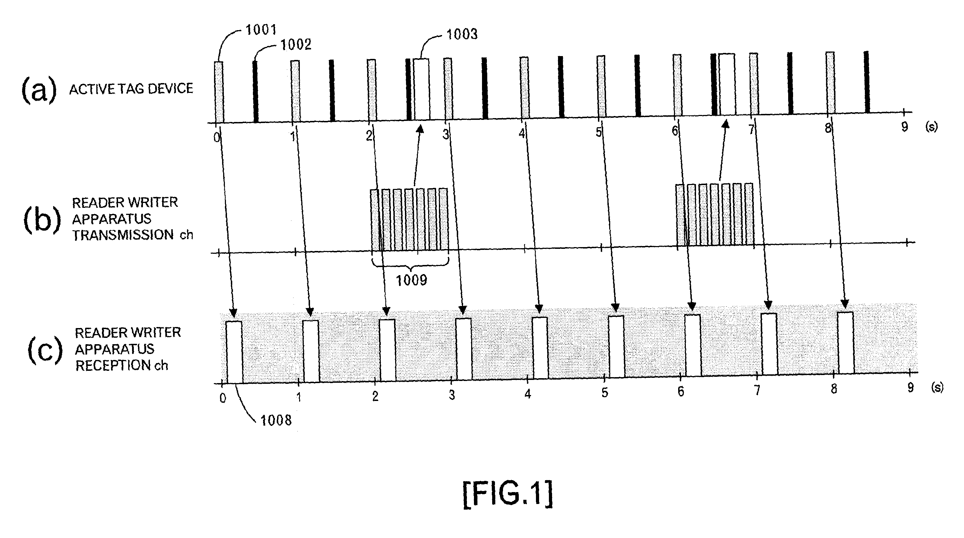

FIG. 1 illustrates a communication sequence between this active tag device that can transmit and receive data and the reader writer apparatus. FIG. 1(a) depicts a processing sequence of the active tag device. Incidentally, different bands are used for the transmission and reception. Specifically, data transmission processing 1001 is carried out, for example, every 1 second, and carrier sense 1002 is carried out between the data transmission processings 1001 independently of the reader writer apparatus. When data transmission by the reader writer apparatus is detected in the carrier sense 1002, data reception processing 1003 is carried out. FIG. 1(b) illustrates a processing sequence of a transmission unit in the reader writer apparatus. Specifically, when data to be transmitted to the active tag device occurs, data transmission (i.e. data transmission processing 1009) continues, for example, during a period from 2nd second to 3rd second and during a period from 6th second to 7th second. Because the carrier sense of the active tag device is carried out independently of the reader writer apparatus, the data transmission continues for one second or more as a carrier sense interval in an example depicted in FIG. 1(b) in order to successfully carry out the data transmission to the active tag device. This causes the consumedpower of the reader writer apparatus tobe increased. Moreover, FIG. 1(c) illustrates a processing sequence of a reception unit in the reader writer apparatus. The reception unit of the reader writer apparatus is always in a reception waiting state (hatched portions in FIG. 1(c) represent the reception waiting state), and when the reception unit detects the data transmission by the active tag device, the reception unit carries out data reception 1008, appropriately.

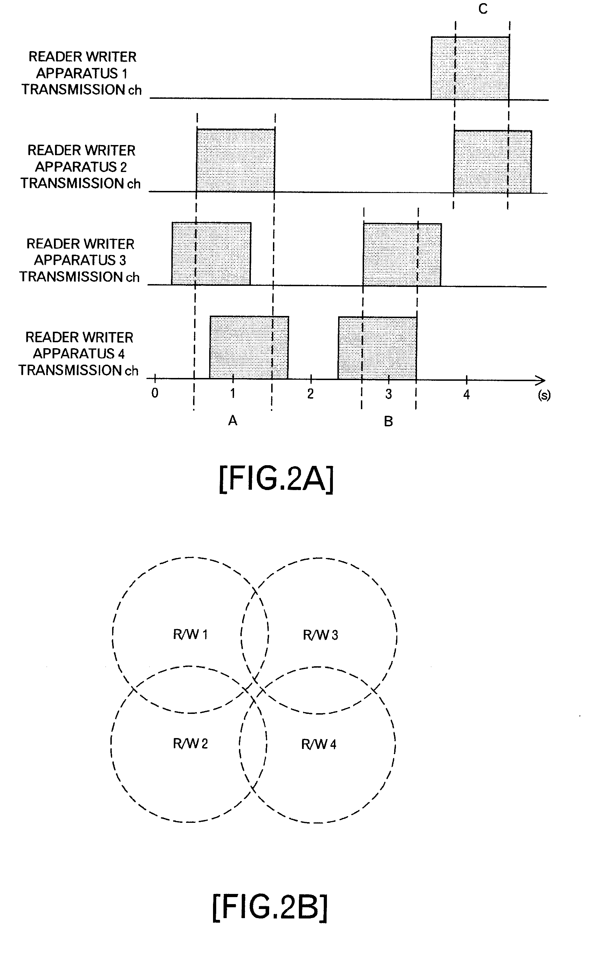

In addition, in FIG. 1, a problem in a case where one reader writer apparatus exists was illustrated. However, also in a case where plural reader writer apparatuses are neighboring each other, another problem may occur. As illustrated in FIG. 2A, for example, when plural neighboring reader writer apparatuses (R/W) 1 to 4 independently carry out the data transmission, mutual interference may frequently occur due to the long transmission time. Specifically, as depicted in FIG. 2B, at time A, there is possibility that the data transmission by the reader writer apparatuses 2 to 4 causes the interference, and the active tag device cannot receive data. In addition, at time B, there is possibility that the data transmission by the reader writer apparatuses 3 and 4 causes the interference and the active tag device cannot receive data. Furthermore, at time C, there is possibility that the data transmission by the reader writer apparatuses 1 and 2 causes the interference and the active tag device cannot be receive data.

Incidentally, a technique for preventing the radio wave interference includes a technique in which, when information signal to its own station is received from a base station, a terminal station transmits a state signal to a wireless tag detection apparatus by power line communication to prohibit the transmission of an inquiry wave to a wireless tag during a predetermined period. However, this technique does not presume the active tag device, and does not handle the interference between the wireless tag detection apparatuses that transmit the inquiry wave to the wireless tag.
Patent Document 1: Japanese Laid-open Patent Publication 2006-338489
Patent Document 2: Japanese Laid-open Patent Publication 2000-134220

### Summary of the Invention

### Problem to be solved by this Invention

Hence, there is no technique that can resolve the aforementioned conventional problem.

Therefore, an obj ect of this technique is to provide a technique enabling efficient communication between the reader writer apparatus and the active tag device.

### Means for solving the Problem

As one aspect of embodiments, a data reading writing apparatus for an active tag device has a wireless communication unit to carry out wireless communication with an active tag device that is capable of carrying out transmission and reception of data wirelessly; and a controller to cause the wireless communication unit to start measuring a first period that is set to synchronize with carrier sense of the active tag device, after the wireless communication unit detected reception of data from the active tag device, and to cause the wireless communication unit to carry out data transmission during a second period for the active tag device after the first period elapsed.

### Brief description of the drawings

FIG. 1 is a diagram representing a processing sequence in a conventional technique;
FIG. 2A is a diagram to explain a problem of the conventional technique;
FIG. 2B is a diagram to explain the problem of the conventional technique;
FIG. 3 is a functional block diagram of an active tag device relating to a first embodiment;
FIG. 4 is a functional block diagram of a reader writer apparatus relating to the first embodiment;
FIG. 5 is a diagram representing a processing sequence of the first embodiment;
FIG. 6 is a diagram representing a processing sequence of the first embodiment;
FIG. 7 is a diagram depicting a processing flow of the active tag device relating to the first embodiment;
FIG. 8 is a diagram representing a processing flow of the reader writer apparatus relating to the first embodiment;
FIG. 9 is a diagram to explain an effect relating to the first embodiment;
FIG. 10 is a system outline diagram relating to a second embodiment;
FIG. 11 is a diagram depicting a processing flow of the reader writer apparatus relating to the second embodiment;
FIG. 12 is a diagram depicting a processing flow of a host apparatus relating to the second embodiment;
FIG. 13 is a diagram to explain an effect of the second embodiment;
FIG. 14 is a diagram to explain the effect of the second embodiment;
FIG. 15 is a functional block diagram of the reader writer apparatus relating to a third embodiment;
FIG. 16 is a diagram depicting an example of a setting value determination table;
FIG. 17 is a diagram depicting a processing flow of the reader writer apparatus relating to the third embodiment;
FIG. 18 is a diagram depicting a processing flow of the active tag device relating to a sixth embodiment;
FIG. 19 is a functional block diagram of the active tag device relating to a seventh embodiment;
FIG. 20 is a diagram depicting a processing flow of the active tag device relating to the seventh embodiment; and
FIG. 21 is a functional block diagram of a computer.

### Best mode for carrying out the invention

### Embodiment 1]

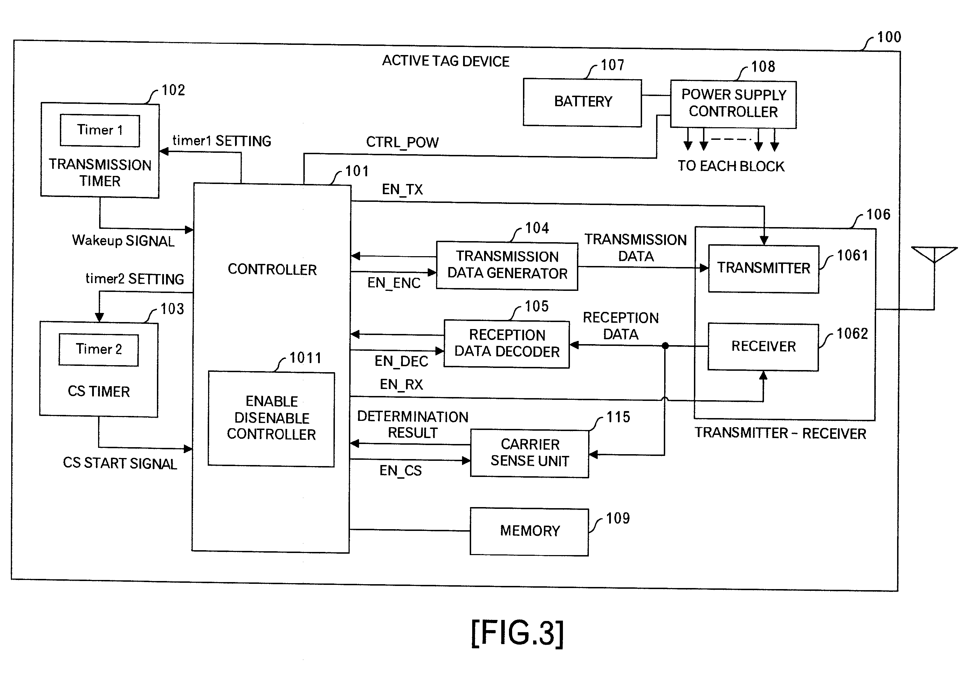

[FIG. 3 illustrates a functional block diagram of an active tag device relating to this first embodiment. The active tag device 100 has a controller 101, transmission timer 102, Carrier Sense (CS) timer 103, transmission data generator 104, reception data decoder 105, transmitter-receiver 106 connected to an antenna, a carrier sense unit 115 and memory 109. Incidentally, the active tag device 100 further includes a battery 107 and power supply controller 108 that supplies the power from the battery 107 to the respective functional blocks.

The transmitter-receiver 106 includes a transmitter 1061 and receiver 1062. The controller 101 has an enable disenable controller 1011. The controller 101 is connected to the transmitter 1061 and receiver 1062 in the transmitter-receiver 106, and is further connected to the transmission data generator 104, reception data decoder 105 and carrier sense unit 115. The transmission data generator 104 is connected to the transmitter 1061 in the transmitter-receiver 106, and the reception data decoder 105 is connected to the receiver 1062 in the transmitter-receiver 106. Furthermore, the controller 101 is connected to the memory 109, and cooperates with the transmission timer 102 and CS timer 103. The carrier sense unit 115 is also connected to the receiver 1062.

The enable disenable controller 1011 of the controller 101 outputs a control signal EN_ENC to the transmission data generator 104, control signal EN_DEC to the reception data decoder 105, control signal EN_TX to the transmitter 1061 in the transmitter-receiver 106, control signal EN_RX to the receiver 1062 in the transmitter-receiver 106 and control signal EN_CS to the carrier sense unit 115. Furthermore, the controller 101 is also connected to the power supply controller 108, and outputs a control signal CTRL_POW. The control signal CURL_PROW is used to control the power supply to the respective modules through the power supply controller 108, and it is also possible to reduce the consumed power by stopping the power supply instead of causing to stop the operation by the control signal.

The transmission data generator 104 generates encoded data by encoding data such as tag ID stored in the memory 109 according to a predetermined encoding method, and outputs the encoded data to the transmitter 1061 in the transmitter-receiver 106. The transmitter 1061 of the transmitter-receiver 106 modulates the carrier by the encoded data of the baseband, which was received from the transmission data generator 104, to transmit a Radio Frequency (RF) signal at a transmission frequency. The receiver 1062 of the transmitter-receiver 106 receives and demodulates the received RF signal to generate baseband encoded data, and outputs the baseband encoded data to the reception data decoder 105. The receiver 1062 also generates data representing carrier strength of the received RF signal, and outputs the generated data to the carrier sense unit 115. The reception data decoder 105 decodes the encoded data received from the receiver 1062 according to the predetermined encoding method to generate decoded data, and outputs the decoded data to the controller 101. The carrier sense unit 115 determines whether or not the carrier of the received RF signal exists, based on the data representing the carrier strength, which was received from the receiver 1062, and outputs the determination result to the controller 101.

The controller 101 sets a value timer1, which represents time to be measured by the transmission timer 102, to the transmission timer 102. The transmission timer 102 measures the period timer1, and outputs a Wakeup signal representing a timing for causing the transmitter 1061 to carry out the data transmission, to the controller 101. In addition, the controller 101 sets a value timer2 to be set to the CS timer 103, to the CS timer 103. The CS timer 103 measures the period timer2, and outputs a CS start signal representing a timing for causing the carrier sense unit 115 to carry out the carrier sense, to the controller 101.

The memory 109 stores information such as the value timer1 to be set to the transmission timer 102, value timer2 to be set to the CS timer 103, data received from the reader writer apparatus and the tag ID. If necessary, the data is updated by the controller 101.

Incidentally, the controller 101 may be a dedicated semiconductor device, or may be realized by a combination of a program for realizing the functions describer later and a processor.

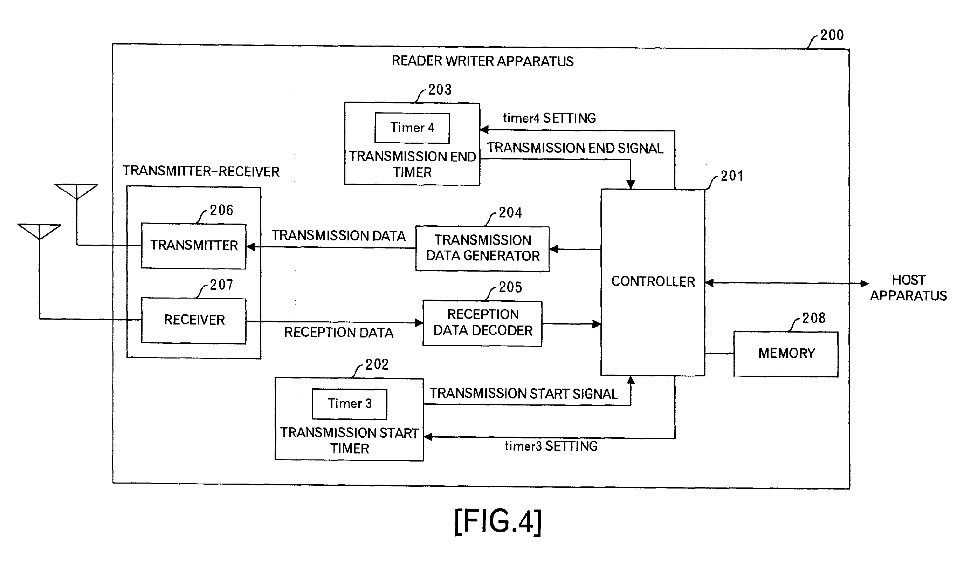

FIG. 4 illustrates a functional block diagram of the reader writer apparatus relating to the first embodiment. The reader writer apparatus 200 has a controller 201, transmission start timer 202, transmission end timer 203, transmission data generator 204, transmitter-receiver having a reception data decoder 205 and a transmitter 206 connected to a transmission antenna, receiver 207 connected to the reception antenna and memory 208. Incidentally, the reader writer apparatus 200 is connected with a host apparatus via a wire, for example.

The controller 201 is connected to the transmission data generator 204, reception data decoder 205 and memory 208, and cooperates with the transmission start timer 202 and transmission end timer 203. The transmission data generator 204 is connected with the transmitter 206, and the reception data decoder 205 is connected with the receiver 207.

When the controller 201 receives a command such as a tag ID request command from the host apparatus, the controller 201 supplies data including such a command to the transmission data generator 204. The transmission data generator 204 generates data in a predetermined format, which includes the command received from the controller 201 and the like, generates encoded data by encoding the generated data according to a predetermined encoding method, and outputs the encoded data to the transmitter 206. The transmitter 206 modulates the carrier by the baseband encoded data received from the transmission data generator 204 to transmit the RF signal at a transmission frequency.

The receiver 207 receives the RF signal in the reception frequency and outputs the reception data to the reception data decoder 205. The reception data decoder 205 decodes the reception data from the receiver 207 according to the predetermined encoding method to generate baseband encoded data, and supplies the generated decoded data to the controller 201.

The memory 208 stores the value timer3 to be set to the transmission start timer 202, value timer4 to be set to the transmission end timer 203, data received from the active tag device 100, data received from the host apparatus and the like.

The controller 201 sets the value timer3 representing a period to be measured by the transmission start timer 202 to the transmission start timer 202. The transmission start timer 202 measures the period timer3, and outputs a transmission start signal representing a timing that the data transmission to the active tag device 100 is to be carried out, to the controller 201 after the end of the measurement. Moreover, the controller 201 sets the value timer4 representing a period to be measured by the transmission end timer 203 to the transmission end timer 203. The transmission end timer 203 measures the period timer4, and, after the end of the measurement, outputs a transmission end signal representing a timing that the data transmission to the active tag device 100 is to be ended, to the controller 201.

Incidentally, the controller 201 may be a dedicated semiconductor device, or may be realized by a combination of a program for realizing functions described later and a processor.

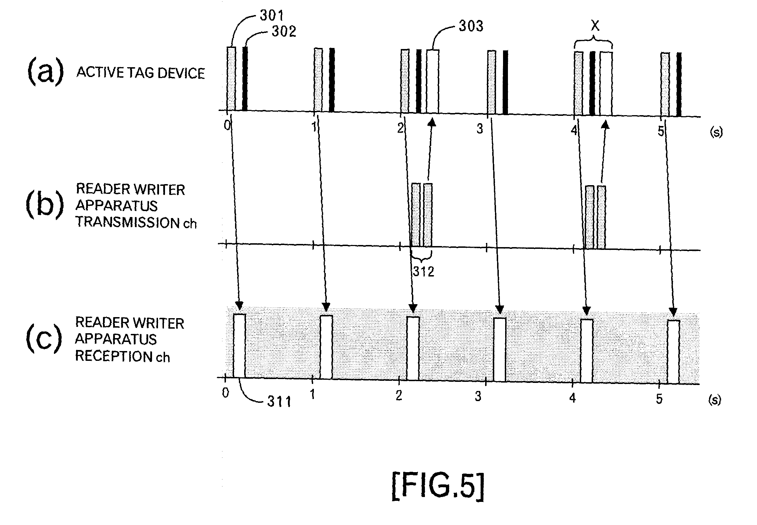

Next, a processing sequence of the active tag device 100 and reader writer apparatus 200 will be explained by using FIG. 5. FIG. 5(a) illustrates a processing sequence of the active tag device 100, and data transmission 301 is carried out for the reader writer apparatus 200 at intervals of timer1 (e.g. one second) . Moreover, after start of the data transmission 301 and after timer2 elapsed, carrier sense 302 is carried out. In addition, FIG. 5(c) illustrates a processing sequence of the receiver 207 in the reader writer apparatus 200. The receiver 207 is always in a reception waiting state (hatched portions represent the reception waiting state), and data reception 311 is carried out in response to the data transmission from the active tag device 100. Moreover, FIG. 5(b) illustrates a processing sequence of the transmitter 206 in the reader writer apparatus 200. In this embodiment, as depicted in FIG. 5(b), after the detection of this data reception 311 and after timer3 elapsed, data transmission 312 is carried out. This data transmission 312 is synchronized with the carrier sense 302 of the active tag device 100, and is detected by the carrier sense of the active tag device 100, and the active tag device 100 carries out the data reception 303. Incidentally, because the data transmission 312 is carried out during a period (timer4 - timer3), the execution time of the data transmission 312 is shortened, and the consumed power is reduced.

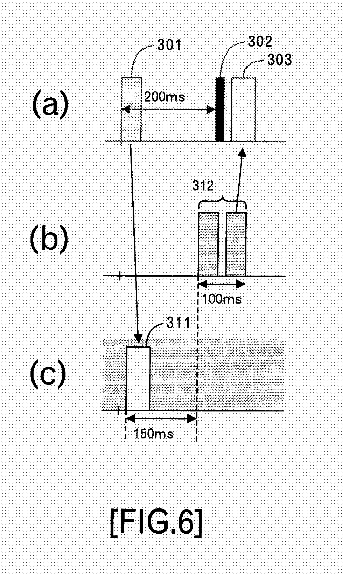

A period X depicted in FIG. 5(a) will be explained in detail by using FIG. 6. For example, the timer1 is one second, timer2 is 200 ms, timer3 is 150 ms, and timer4 is 250 ms. FIG. 6(a) represents a processing sequence of the active tag device 100, FIG. 6(b) represents a processing sequence of the transmitter 206 of the reader writer apparatus 200, and FIG. 6(c) represents a processing sequence of the receiver 207 of the reader writer apparatus 200. As depicted in FIG. 6, the transmitter 1061 of the active tag device 100 carries out the data transmission 301 at intervals of timer1, and the carrier sense 302 is carried out after timer2 (= 200 ms) elapsed from the start of the data transmission 301. On the other hand, the receiver 207 of the readerwriter apparatus 200 carries out data reception 311 in response to the data transmission 301 by the active tag device 100. Then, after the timer3 elapsed since the start of the data reception 311, the transmitter 206 of the reader writer apparatus 200 starts the data transmission 312. The data transmission 312 is carried out during a period (timer4 - timer3) = 100 ms. In response to this data transmission 312, the receiver 1062 of the active tag device 100 carries out data reception 303. Thus, when the timing of the carrier sense by the active tag device 100 is determined, it is possible to adjust the data transmission timing of the reader writer apparatus 200, and it is also possible to shorten the data transmission time. Therefore, the consumed power of the reader writer apparatus 200 can be reduced.

Incidentally, there is a case when one reader writer apparatus 200 communicates with plural active tag devices 100. However, the clocks of the respective active tag devices 100 normally have differences, and even when the same value is set to timer3, the possibility that the timings are different is very high. Therefore, the communication is carried out without any problem.

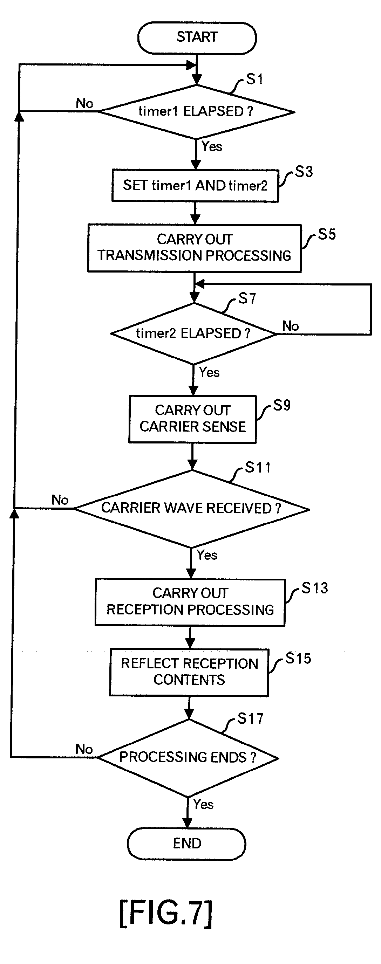

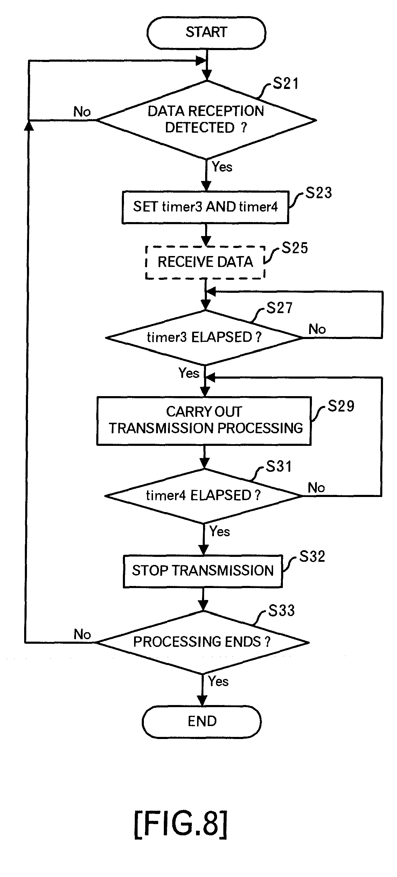

Next, a detailed processing to realize the processing sequences illustrated in FIGs. 5 and 6 will be explained by using FIGS. 7 and 8. First, a processing of the active tag device 100 is explained by using FIG. 7. The controller 101 determines whether or not the period timer1 set to the transmission timer 102 elapsed (step S1). When the period timer1 elapsed, the transmission timer 102 outputs the Wakeup signal to the controller 101. Therefore, the controller 101 determines whether or not the Wakeup signal is received. When the period timer1 does not elapse, the controller 101 waits until the signal is received. When the period timer1 elapsed and the Wakeup signal is received, the controller 101 sets timer1 stored, for example, in the memory 109 to the transmission timer 102, and sets timer2 similarly stored, for example, in the memory 109 to the CS timer 103 (step S3). The transmission timer 102 and CS timer 103 start the measurement of the periods corresponding to the values when the values are set.

Moreover, after the step S3 or at the same time as the step S3, the enable disenable controller 1011 of the controller 101 instructs the transmission data generator 104 and transmitter 1061 by the EN_ENC signal and EN_TX signal to start the processing, and outputs data to be sent to the transmission data generator 104 to cause the transmission data generator 104 to generate transmission data, and causes the transmitter 1061 to transmit the transmission data to the reader writer apparatus 200 at the transmission frequency (step S5) . When the data transmission ends, the enable disenable controller 1011 stops the operation of the transmitter 1061 and transmission data generator 104 by the EN_TX signal and EN_ENC signal to reduce the power consumption.

Furthermore, the controller 101 determines whether or not the period timer2 set to the CS timer 103 elapsed (step S7). When the period timer2 elapsed, the CS timer 103 outputs the CS start signal to the controller 101. Therefore, the controller 101 determines whether or not the CS start signal is received. When the period timer2 does not elapse, the controller 101 waits until the period timer2 elapsed. When the period timer2 elapsed and the CS start signal was received, the controller 101 instructs the receiver 1062 and carrier sense unit 115 by the EN_RX signal and EN_CS signal to start the processing, and causes them to carry out the carrier sense, by causing the receiver 1062 to output data of the reception level to the carrier sense unit 115, and causing the carrier sense unit 115 to determine based on the data of the reception level whether or not a carrier signal of the received RF signal exists, and receiving the determination result (step S9).

The controller 101 determines whether or not the determination result received from the carrier sense unit 115 indicates that the carrier wave was received from the reader writer apparatus 200 (step S11). When the carrier wave is not received, the processing returns to the step S1. Incidentally, in order to reduce the power consumption, the controller 101 stops the operation of the receiver 1062 and carrier sense unit 115 by the EN_RX signal and EN-CS signal.

On the other hand, when the carrier wave was received, the controller 101 instructs the reception data decoder 105 by the EN_DEC signal to start the processing, and carries out a reception processing that includes causing the receiver 1062 to generate reception data from the received RF signal, causing the reception data decoder 105 to generate decoded data from the reception data, and receiving the decoded data (step S13). The controller 101 carries out a processing such as updating contents of the memory 109, for example, by the received decoded data (step S15). After the completion of the reception processing, in order to reduce the consumed power, the controller 101 stops the operations of the reception data decoder 105 and receiver 1062 by the EN_DEC signal and EN_RX signal.

After that, the processing returns to the step S1, unless it is determined that the processing ends because of any reason (step S17: No route). On the other hand, when it is determined that the processing ends because of any reason, the processing ends (step S17: Yes route).

Next, a processing of the reader writer apparatus 200 is explained by using FIG. 8. In the reader writer apparatus 200, the receiver 207 is always in a reception waiting state. Therefore, when the receiver 207 receives the RF signal at the reception frequency from the active tag device 100, the receiver 207 generates reception data from the RF signal, and outputs the reception data to the reception data decoder 205, and the reception data decoder 205 decodes the reception data received from the receiver 207 according to a predetermined encoding method to generate baseband encoded data, and supplies the generated decoded data to the controller 201.When the controller 201 starts receiving the decoded data from the reception data decoder 205 in this way, the controller 201 sets timer3 stored, for example, in the memory 208 to the transmission start timer 202, and sets timer4 stored, for example, in the memory 208, to the transmission end timer 203 (step S23) . Incidentally, the data reception continues separately from the step S23 (step S25). Because the data reception itself continues separately from the step S23, the dotted block is depicted in FIG. 8. In addition, the transmission start timer 202 and transmission end timer 203 start measuring the period respectively corresponding to timer3 and timer4 when the values are set.

Then, the controller 201 determines whether or not the period timer3 set to the transmission start timer 202 elapsed (step S27). When the period timer3 elapsed, the transmission start timer 202 outputs a transmission start signal to the controller 201. Then, the controller 201 determines whether or not the transmission start signal was received. When the period timer3 elapsed, the processing returns to the step S27. On the other hand, when the period timer3 elapsed and the transmission start signal was received, the controller 201 outputs data instructed, for example, from the host apparatus, to transmit, to the transmission data generator 204, and carries out a transmission processing by causing the transmission data generator 204 to generate transmission data, further causing the transmitter 206 to generate a transmission RF signal according to the transmission data and transmit the transmission RF signal to the active tag device 100 (step S29). This transmission processing continues until a transmission end signal is received as described later.

On the other hand, the controller 201 determines whether or not the period timer4 set to the transmission end timer 203 elapsed (step S31). When the period timer4 elapsed, the transmission end timer 203 outputs a transmission end signal to the controller 201. Therefore, the controller 201 determines whether or not the transmission end signal was received. When the period timer4 does not elapse, the processing returns to the step S29. On the other hand, when the period timer4 elapsed and the transmission end signal was received, the controller 201 stops the data output to the transmission data generator 204 to stop the transmission of the RF signal from the transmission 206 (step S32). After that, the processing returns to the step S21, unless it is determined that the processing ends because of any reason (step S33: No route). On the other hand, when it is determined that the processing ends because of any reason, the processing ends (step S33: Yes route).

By carrying out the aforementioned processing, it is possible to sufficiently communicate between the reader writer apparatus 200 and the active tag device 100 even when the data transmission period in the reader writer apparatus 200 is shortened. In addition, it becomes possible to efficiently utilize the band of the radio wave.

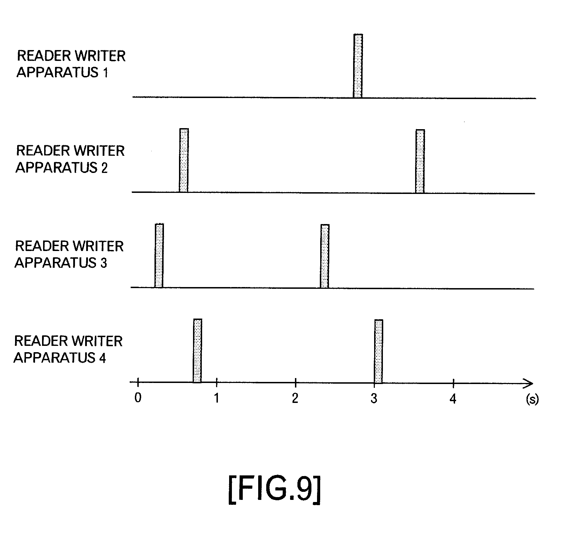

Moreover, as depicted in FIG. 9, even when the reader writer apparatuses 1 to 4 are neighboring each other, the possibility that the data transmission interferes each other is greatly reduced, because the data transmission period by the reader writer apparatus 200 is shortened as described above. Namely, the communication efficiency between the active tag device 100 and the reader writer apparatus 200 is improved.

### [Embodiment 2]

In case of the first embodiment, when plural reader writer apparatuses 200 receive the RF signal outputted by the same active tag device 100, the plural reader writer apparatuses 200 may carry out the data transmission simultaneously to cause the interference. This embodiment deals with such a case.

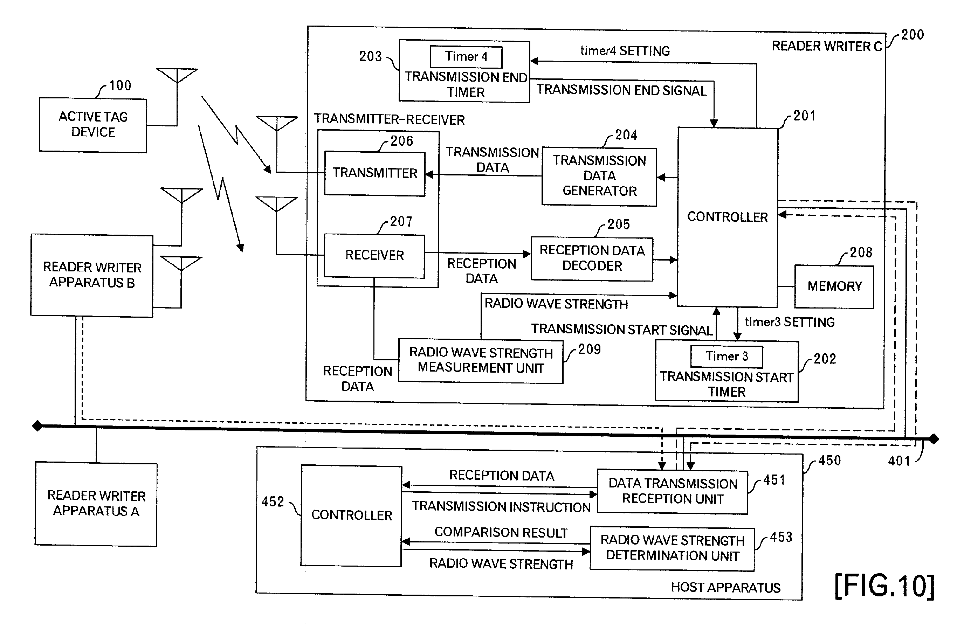

FIG. 10 illustrates a system outline relating to the second embodiment. Here, the reader writer apparatuses A to C are connected to a host apparatus 450 through a network 401. The network 401 is a wired network, for example. However, it may be a wireless network. The reader writer apparatus 200 in this embodiment has a radio wave strength measurement unit 209 that measures the radio wave strength based on the reception data from the receiver 207 in addition to the functions depicted in FIG. 4. The radio wave strength measurement unit 209 outputs radio wave strength data that is a result of the radio wave strength measurement to the controller 201. Incidentally, the controller 201 transmits an identifier (ID) of the reader writer apparatus, received decoded data (including a tag ID) and the radio wave strength data to the host apparatus 450 through the network 401.

The host apparatus 450 has a data transmission reception unit 451 that carries out data communication through the network 401, controller 452 and radio wave strength determination unit 453. When receiving data through the network 401, the data transmission reception unit 451 outputs the reception data to the controller 452, and transmits data and a transmission instruction to a reader writer apparatus relating to the instruction from the controller 452 in response to the instruction of the controller 452. The controller 452 outputs a tag ID, an ID of a transmission source reader writer apparatus and radio wave strength data to the radio wave strength determination unit 453. The radio wave strength determination unit 453 identifies an ID of the reader writer apparatus whose received radio wave strength is strongest from the received radio wave strength data for the same tag ID, and outputs the ID of the reader writer apparatus as a comparison result to the controller 452. When the controller 452 receives the ID of the reader writer apparatus whose received radio wave strength is strongest as the comparison result, the controller 452 causes the data transmission reception unit 451 to transmit data to be transmitted and a transmission command to the identified reader writer apparatus.

The controller 101 of the reader writer apparatus 200, which received the data to be transmitted and transmission command through the network 401, outputs the data to be transmitted to the transmission data generator 204 to cause the transmission data generator 204 to generate the transmission data at the same timing as that in the first embodiment, and causes the transmitter 206 to transmit an RF signal corresponding to the transmission data.

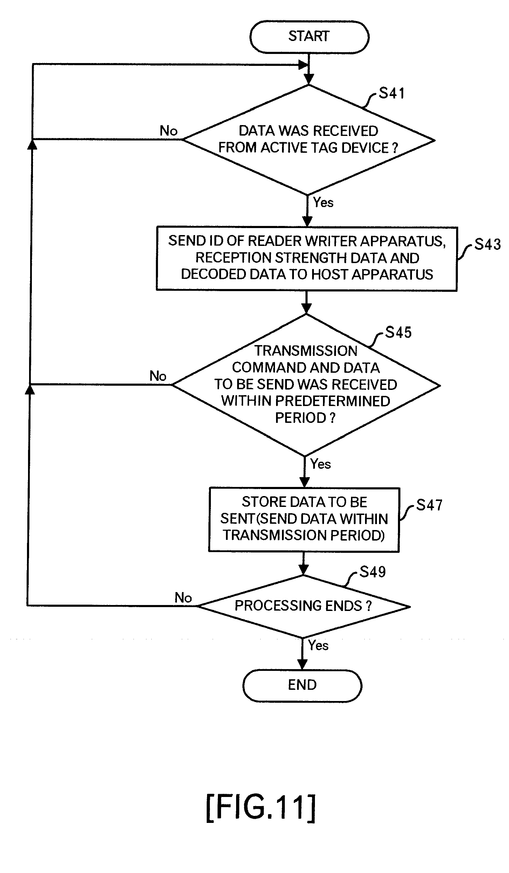

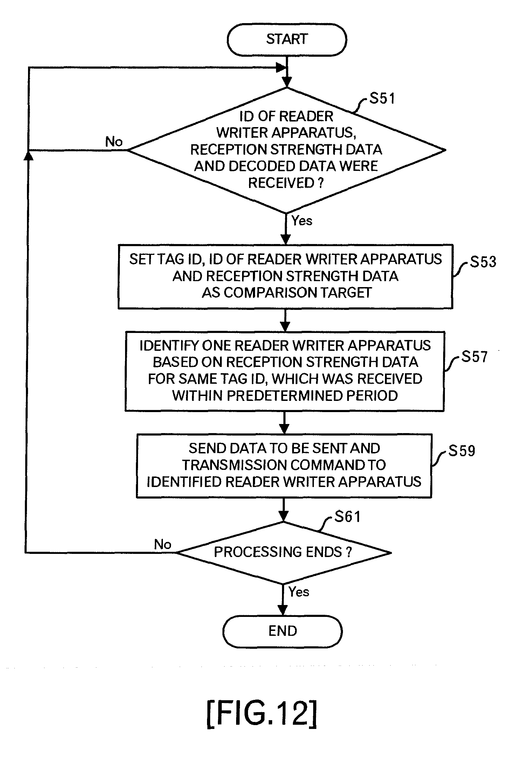

Next, a processing of the respective reader writer apparatuses 200 and host apparatus 450 will be explained by using FIGs. 11 and 12. First, a processing of the reader writer apparatus 200 is explained by using FIG. 11. The controller 201 determines whether or not data was received from the active tag device 100 through the receiver 207 and reception data decoder 205 (step S41) . When no data is received from the active tag device 100, the processing returns to the step S41. On the other hand, when the data was received from the active tag device 100, the controller 201 receives the radio wave strength data from the radio wave strength measurement unit 209 that measured the radio wave strength from the reception data from the receiver 207, and transmits the radio wave strength data, decoded data received from the reception data decoder 205 (which includes an tag ID of the active tag device 100) and an ID of the reader writer apparatus, which is stored, for example, in the memory 208, to the host apparatus 450 through the network 401 (step S43) . Then, the controller waits for the transmission command and the like from the host apparatus 450.

The controller 201 determines whether or not the transmission command and data to be transmitted was received from the host apparatus 450 within a predetermined period set so as to be in a timing that the data transmission is carried after the period timer3 elapsed, for example (step S45). When the transmission command and the like are not received within the predetermined period, the processing returns to the step S41 as considering this reader writer apparatus is not selected as a reader writer apparatus 200, which will carry out the data transmission to the active tag device 100 whose tag ID was received this time.

On the other hand, when the transmission command and data to be transmitted was received within the predetermined period, the controller 201 stores the data to be transmitted, for example, into the memory 208, to use the stored data for the transmission processing carried out, for example, at the step S29 of FIG. 8 (step S47). After that, the processing returns to the step S41, unless it is determined that the processing ends because of any reason (step S49: No route) . On the other hand, when it is determined that the processing ends because of any reason, the processing ends (step S49: Yes route).

Next, a processing flow of the host apparatus 450 is explained by using FIG. 12. First, the controller 452 determines whether or not an ID of the reader writer apparatus, reception strength data and decoded data (including an tag ID. In addition, it is also called the reception data from the active tag device 100.) were received from the reader writer apparatus 200 through the data transmission reception unit 451 (step S51). When such data is not received, the processing returns to the step S51. When such data was received, the controller 452 stores the received tag ID, the ID of the reader writer apparatus, reception strength data and decoded data into a storage device (not shown), and sets the tag ID, ID of the reader writer apparatus and reception strength data to the radio wave strength determination unit 453 as a comparison target (step S53). The radio wave strength determination unit 453 holds the reception strength data and ID of the reader writer apparatus for each tag ID. Then, the radio wave strength determination unit 453 identifies an ID of the reader writer apparatus, which transmitted the reception strength data whose reception strength is strongest, based on the reception strength data for the same tag ID, which was received within the predetermined period, and outputs the identified ID to the controller 452 (step S57). Incidentally, when data was received from only one reader writer apparatus 200 for one tag ID within the predetermined period, the radio wave strength determination unit 453 outputs the ID of that reader writer apparatus 200.

When the controller 452 receives the ID of the reader writer apparatus from the radio wave strength determination unit 453, the controller 452 causes the data transmission reception unit 451 to transmit the data to be transmitted, which is prepared separately, and the transmission command to the reader writer apparatus 200 identified from the received ID of the reader writer apparatus (step S59) . As illustrated in FIG. 10, the reception strength data and the like were received from the reader writer apparatuses B and C, and when it is determined that the reception strength of the reception strength data from the reader writer apparatus C is strongest, the data to be transmitted and transmission command are transmitted to the reader writer apparatus C.

After that, the processing returns to the step S51, unless it is determined that the processing ends due to any reason (step S61: No route). On the other hand, when it is determined that the processing ends because of any reason, the processing ends (step S61: Yes route).

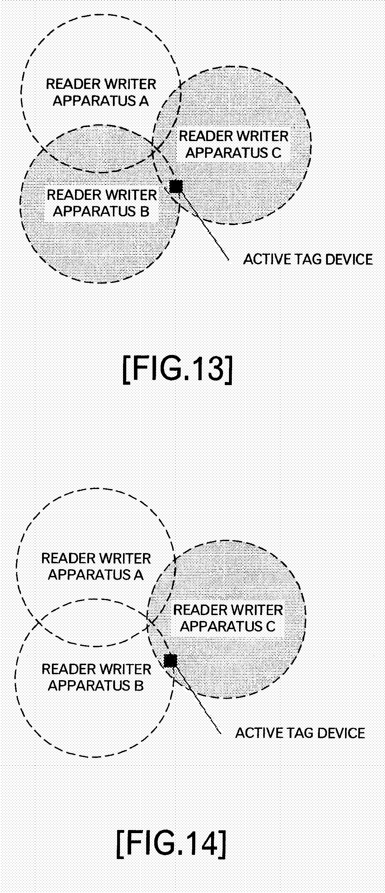

By carrying out the aforementioned processing, even when plural reader writer apparatuses 200 receive data from the same active tag device 100, only one reader writer apparatus 200, which will reply with data in response to the reception of data, is identified. For example, as depicted in FIG. 13, it is assumed that the reader writer apparatuses A to C are disposed so that the receptable areas of three reader writer apparatuses A to C overlap with each other. Then, when the active tag device 100 is positioned about between the reader writer apparatuses B and C, both of the reader writer apparatuses B and C can receive data from the active tag device 100. In such a case, when both of the reader writer apparatuses B and C transmit data to the active tag device 100, the interference of the radio wave occurs and there is possibility that the active tag device 100 cannot receive data. However, as depicted in FIG. 14, in this embodiment, only the reader writer apparatus C transmits data to the active tag device 100, for example. Therefore, no interference of the radio wave occurs, and the possibility that the active tag device 100 can receive data becomes high.

### [Embodiment 3]

In the aforementioned embodiments, the value timer3 is the same as that in all of the active tag devices 100. However, when the different value is used for each active tag device 100, it becomes possible to decrease the possibility that the interference of the radio wave occurs in the communication. In this embodiment, a processing to use the different value of timer3 for each active tag device 100 will be explained.

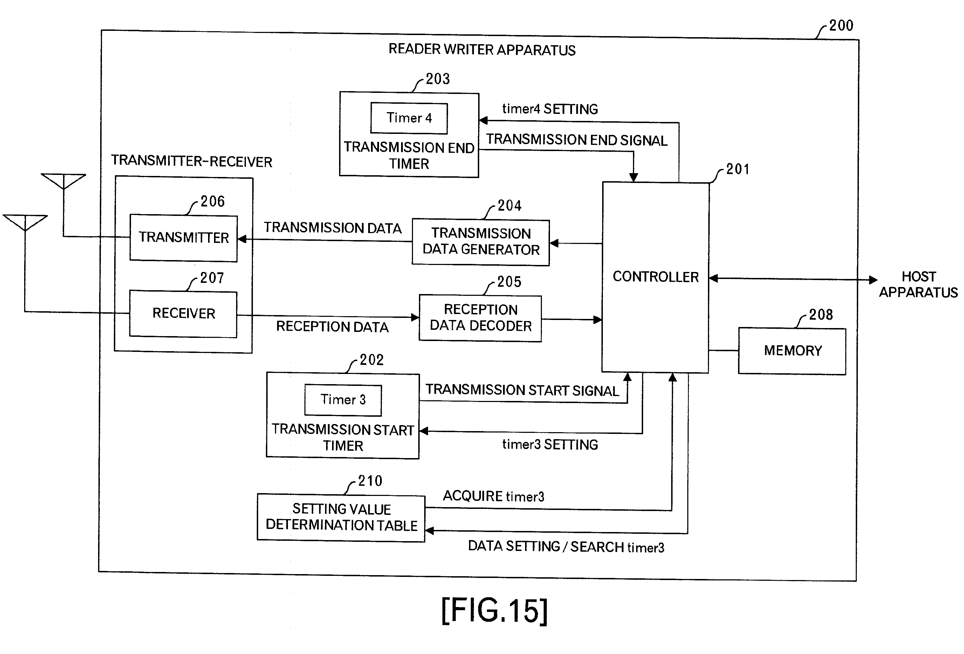

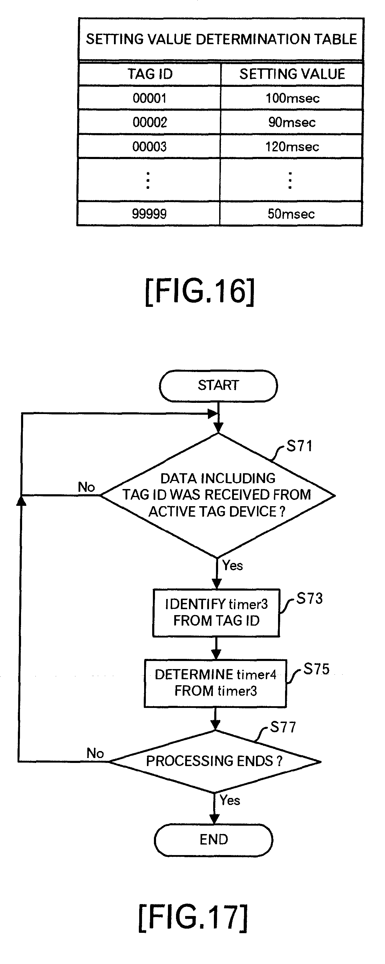

FIG. 15 illustrates a functional block diagram of the reader writer apparatus 200 in this embodiment. The reader writer apparatus 200 in this embodiment further has a setting value determination table 210 to set the value timer3 in addition to the functions depicted in FIG. 4. The controller 201 receives combinations of the tag ID and corresponding setting value timer3 from the host apparatus or the like in advance, and sets the received data into the setting value determination table 210. For example, the setting value determination table 210 as depicted in FIG. 16 is held. In an example of FIG. 16, a tag ID and setting value are associated. When the controller 201 receives data for the setting value determination table 210 from, for example, the host apparatus or the like, the controller 201 carries out data setting to the setting value determination table 210, and when the controller 201 receives the tag ID from the active tag device 100, the controller 201 searches the setting value determination table 210 by the tag ID to obtain the corresponding setting value timer3.

Next, a processing of the reader writer apparatus 200 in this embodiment is explained by using FIG. 17. The controller 201 determines whether or not data including a tag ID was received from the active tag device 100 through the receiver 207 and reception data decoder 205 (step S71). When no data is received from the active tag device 100, the processing returns to the step S71. On the other hand, when the data including the tag ID was received from the active tag device 100, the controller 201 searches the setting value determination table 210 by the tag ID to identify the corresponding value timer3 (step S73) . Furthermore, the controller 201 determines a value timer4 by adding a time (e.g. 100 ms), for which the data transmission is carried out to the active tag device 100 from the reader writer apparatus 200, to the value timer3 (step S75).

After that, the processing returns to the step S51, unless it is determined that the processing ends due to any reason (step S77: No route). On the other hand, when it is determined that the processing ends because of any reason, the processing ends (step S77: Yes route).

By doing so, in the processing flow in FIG. 8, the value timer3 is set according to each of the active tag devices 100, and data transmission can be carried out synchronously with the carrier sense of the active tag device 100.

Accordingly, when plural active tag devices 100 exist, the possibility that the interference occurs can be decreased.

### [Embodiment 4]

In the third embodiment, an example that the setting value determination table 210 that is an association table of the tag ID and the setting value of timer3 is used was illustrated. However, the table is not always used. For example, a mathematical operational expression whose variable is the tag ID and which outputs the setting value of timer3 may be defined, and at the step S73 in the processing flow of FIG. 17, the setting value of timer3 may be calculated by the mathematical operational expression.

### [Embodiment 5]

In the third and fourth embodiments, the setting value of timer3 is identified by using, as a key, the tag ID of the active tag device 100. However, data other than the tag ID may be used. In other words, by adopting data whose type is other than the tag ID as the key of the setting value determination table 210, for example, in the third embodiment, and transmitting such a type of data from the active tag device 100, the controller 201 may search for a corresponding value of timer3 by using such a type of data.

Furthermore, by adopting data whose type is other than the tag ID as the variable of the mathematical operational expression in the fourth embodiment, and transmitting such a type of data from the active tag device 100, the controller 201 of the reader writer apparatus 200 may calculate the value of timer3 according to the mathematical operational expression by using such a type of data.

### [Embodiment 6]

In the third to fifth embodiments, examples that the value of timer3 is changed for each active tag device 100 were explained. However, the value of timer2 may be changed for the same active tag device 100, for example, randomly or regularly, and in response to this change, the value of timer3 in the reader writer apparatus 200 may be changed.

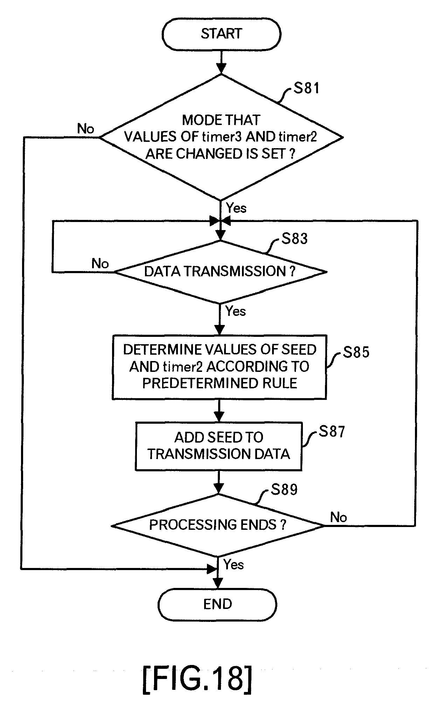

In such a case, for example, the memory 109 of the active tag device 100 stores plural sets of the value of timer2 and a value of a seed corresponding to timer2. Then, a processing illustrated in FIG. 18 is carried out by the controller 101 of the active tag device 100.

First, the controller 101 determines whether or not a mode in which the values of timer3 and timer2 are changed is set (step S81). For example, it is determined that this mode is instructed by an instruction from a user or setting of the system. When this mode is not instructed, the processing ends. On the other hand, when this mode is instructed, the controller 101 determines whether or not the present time is a timing that data transmission is to be carried out (step S83). When the present time is not a timing that the data transmission is to be carried out, the controller 101 waits for the timing of the data transmission. When the present time becomes the timing of the data transmission (or a timing immediately before the data transmission), the controller 101 determines the value of the seed, which is to be transmitted to the reader writer apparatus 200, and the value of timer2 corresponding to the seed, according to a predetermined rule (step S85) . The predetermined rule may be a regular rule such as a round robin, or the value of the seed may be randomly selected by generating the random number.

Then, the controller 101 adds the seed to the data to be transmitted to the reader writer apparatus 200 (step S87). Then, the data is transmitted at the step S29 of FIG. 8.

After that, the processing returns to the step S83, unless it is determined that the processing ends because of any reason (step S89: No route) . On the other hand, the processing ends, when it is determined that the processing ends because of any reason (step S89: Yes route).

On the other hand, in the reader writer apparatus 200, as described in the third to fifth embodiments, the setting value table 210, as illustrated in FIG. 16, in which a seed and corresponding value of timer3 are associated, may be prepared in advance, or a mathematical operational expression for calculating the value of timer3 using, as the variable, the value of the seed, may be prepared. Then, the seed included in the data received from the active tag device 100 is extracted to identify the corresponding value of timer3.

Thus, even in case of the same active tag device 100, the timing of the carrier sense is changed for each time of the data transmission (however, including not each time but sometimes) and the data transmission timing of the reader writer apparatus 200 is changed, synchronously with the change of the timing of the carrier sense. Therefore, it becomes possible to reduce the possibility that the interference of the radio wave occurs.

### [Embodiment 7]

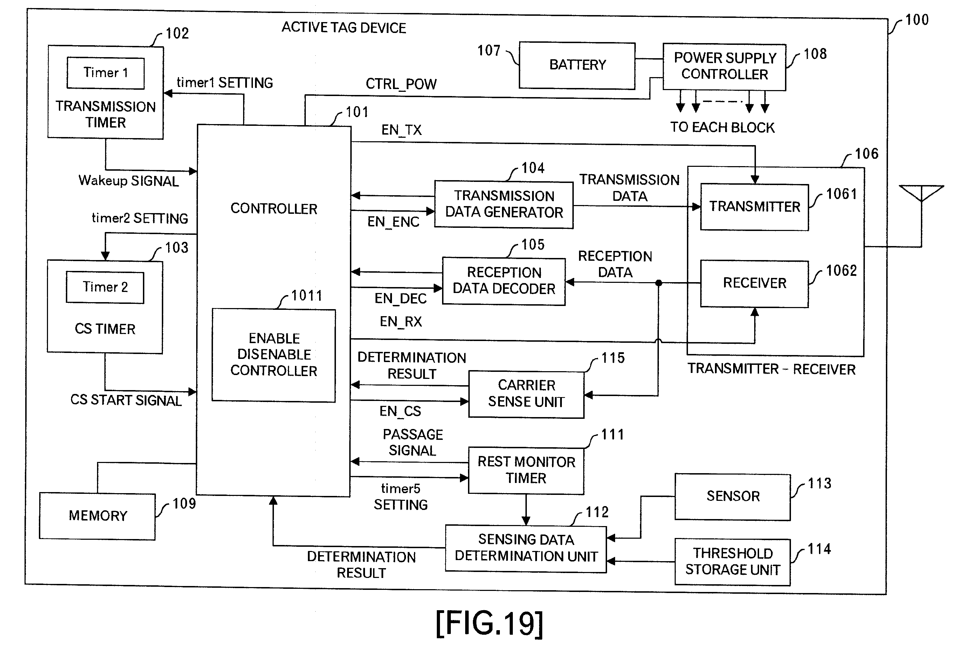

In this embodiment, in order to reduce the consumed power of the active tag device 100, the interval of the data transmission is prolonged when the active tag device 100 does not move. Therefore, in this embodiment, the active tag device 100 has a configuration as illustrated in FIG. 19. In FIG. 19, the active tag device 100 has a rest monitor timer 111, sensing data determination unit 112, sensor 113 such as a vibration sensor and threshold storage unit 114 storing thresholds for the sensor or the like in addition to the functions illustrated in FIG. 3.

When the sensor 113 detects the vibration, for example, the sensor 113 outputs vibration strength representing the degree of the vibration to the sensing data determination unit 112. The sensing data determination unit 112 compares the vibration strength from the sensor 113 with a first threshold, which is stored in the threshold storage unit 114 and corresponds to a rest state, and outputs the determination result to the controller 101.

When the determination result from the sensing data determination unit 112 represents the rest state, the controller 101 sets timer5 stored, for example, in the memory 109, to the rest monitor timer 111. Then, when the determination result from the sensing data determination unit 112 continuously represents the rest state until a passage signal is outputted to the controller 101 after the measurement of timer5 by the rest monitor timer 111 is complete, the controller 101 changes timer1 to timer11, which represents a time longer than an initial value of timer1. Namely, timer1 to be set at the step S3 of FIG. 7 is changed to timerl1.

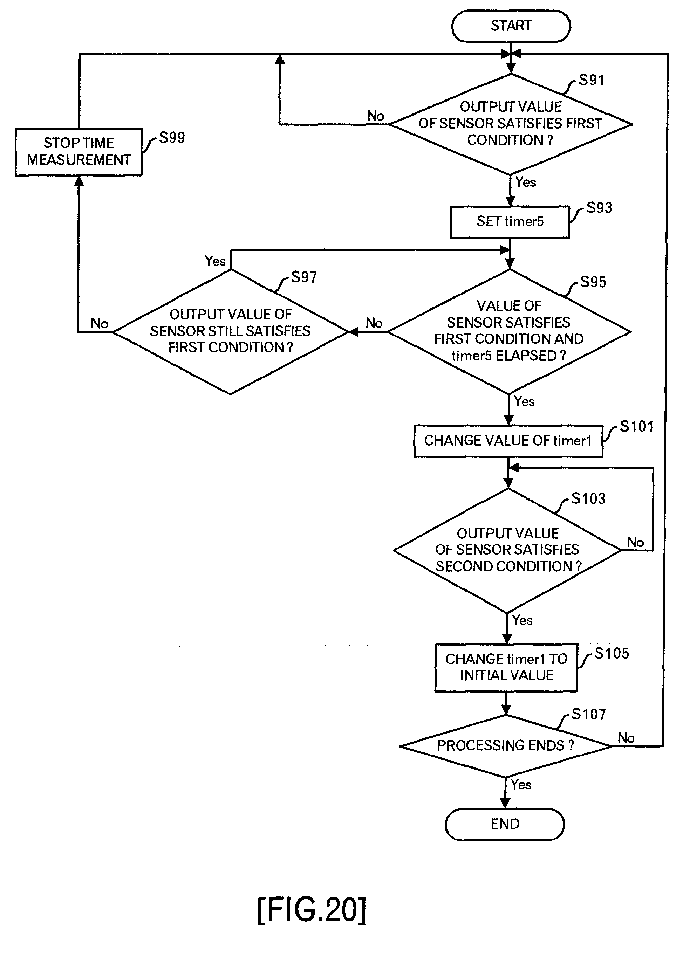

Next, a detailed processing of the active tag device 100 in this embodiment is explained by using FIG. 20. First, the sensing data determination unit 112 determines whether or not an output value (here, vibration strength) of the sensor 113 satisfies a first condition (in case of the vibration strength, less than a first threshold) (step S91) . When the first condition is not satisfied, the processing returns to the step S91.

On the other hand, when the output value of the sensor 113 satisfies the first condition, the sensing data determination unit 112 outputs the determination result representing the first condition is satisfied to the controller 101, and in response to this, the controller 101 sets timer5 stored, for example, in the memory 109 to the rest monitor timer 111 (step S93).

Then, the controller 101 determines whether or not the determination result representing the first condition is satisfied was received from the sensing data determination unit 112, and the passage signal of timer5 was received from the rest monitor timer 111 (step S95). When the determination result representing the first condition is satisfied is not received or timer5 does not elapse, the controller 101 determines whether or not the determination result from the sensing data determination unit 112 represents the output value of the sensor 113 still satisfies the first condition (step S97). When the output value of the sensor 113 does not satisfy the first condition and timer5 do not elapse, yet, the processing returns to the step S95. On the other hand, when the output of the sensor 113 does not satisfy the first condition, the controller 101 instructs the rest monitor timer 111 to stop the measure the time (step S99). Then, the processing returns to the step S91.

When the determination result from the sensing data determination unit 112 represents the output value of the sensor 113 satisfies the first condition, and the passage signal of timer5 was received from the rest monitor timer 111, the controller 101 changes timer1 to be set at the step S3 of FIG. 7 to timer11 that is longer than timer1 (step S101). Then, the controller 101 determines whether or not a determination result representing that the output of the sensor 113 satisfies a second condition was received from the sensing data determination unit 112 (steps 103) . For example, the second condition is a condition to determine whether or not a state of the active tag device 100 shifts to a movement state from a rest state, and in case of the vibration sensor, the second condition is that the vibration strength exceeds a second threshold value of the vibration strength. The second threshold value may be the same value as the first threshold value.

When the determination result representing the output value of the sensor 113 satisfies the second condition is not received, the processing returns to the step S103. On the other hand, when the determination result representing that the output value of the sensor 113 satisfies the second condition, the controller 101 returns timer11, which is currently set to the transmission timer 102, to timer1, which is an initial value (step S105). In other words, when the value is set at the step S3 of FIG. 7 next, timer1 will be set.

After that, the processing returns to the step S91, unless it is determined that the processing ends because of any reason (step S107: No route) . On the other hand, when it is determined that the processing ends because of any reason, the processing ends (step S107: Yes route).

When the active tag device 100 is in the rest state, the necessity that data of the active tag device 100 is notified to the reader writer apparatus 200 decreases. Therefore, the transmission interval defined by timer1 is prolonged, and the consumed power relating to the transmission is reduced. On the other hand, when the state of the active tag device 100 shifts to the moving state again, the value of timer1 returns to an original value to normally carry out the data transmission.

### [Embodiment 8]

In the seventh embodiment, an example of the sensor 113 is the vibration sensor. However, a sensor such as a human sensor, accelerometer, illuminometer, hygrometer or the like or a combination of arbitrary sensors may be adopted, and the value of timer1 may be changed based on the output value of such a sensor.

Although the embodiments of this technique are described above, this technique is not limited to these embodiments. For example, the aforementioned functional block diagrams illustrate functional divisions in order to explain this application. However, the functional block diagrams may not correspond to an actual apparatus configuration. For example, when the timers are implemented by software, they may exist in the controller 101 or controller 201. Furthermore, the controller 101 or controller 201 may be implemented by a processor having a built-in memory (e.g. flash memory) to store a program, or the memory itself may be provided outside the processor.

Furthermore, in the aforementioned processing flows, as long as the same processing result can be obtained, an order of the processing may be changed, or parallel processing may be executed. Moreover, examples that the transmitter-receiver is used were explained in the embodiments. However, the transmitter and receiver may be held, separately. Furthermore, the power may be supplied to the active tag device wirelessly or from other power supply device, instead of the battery.

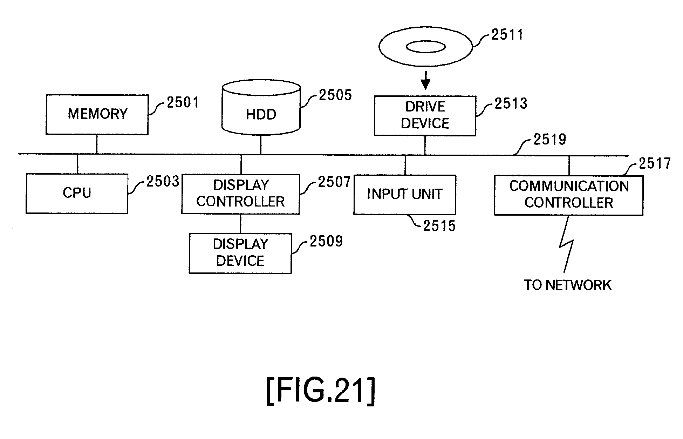

In addition, the host apparatus 450 and reader writer apparatus 200 are computer devices as shown in FIG. 21. That is, a memory 2501 (storage device), a CPU 2503 (processor), a hard disk drive (HDD) 2505, a display controller 2507 connected to a display device 2509, a drive device 2513 for a removable disk 2511, an input device 2515, and a communication controller 2517 for connection with a network are connected through a bus 2519 as shown in FIG. 21. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform necessary operations. Besides, intermediate processing data is stored in the memory 2501, and if necessary, it is stored in the HDD 2505. In this embodiment of this invention, the application program to realize the aforementioned functions is stored in the computer-readable removable disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the necessary application programs systematically cooperate with each other, so that various functions as described above in details are realized.

The embodiments are outlined as follows:

A data reading writing apparatus relating to a first aspect has: a wireless communication unit to carry out wireless communication with an active tag device that is capable of carrying out data transmission and reception wirelessly; and a controller to cause to start measurement of a first period set for synchronizing with carrier sense of the active tag device after the wireless communication unit detected reception of data from the active tag device, and to cause the wireless communication unit to carry out data transmission to the active tag device during a second period after the first period elapsed.

Bymeasuring the first period in this way, it is possible to synchronize with the active tag device, and by carrying out the data transmission only during the second period, it is possible to reduce the interference of the radio wave, and the efficiency of the communication is improved. Furthermore, because the data transmission period is shortened, the consumed power is reduced.

Moreover, the data reading writing apparatus relating to the first aspect may have a reception strength measurement unit to measure reception strength of a wireless signal from the active tag device; and a second communication unit to communicate with a host apparatus. At that time, the aforementioned controller may transmit the reception strength to the host apparatus through the second communication unit, and when data transmission is instructed based on the reception strength from the host apparatus, the controller may cause the wireless communication unit to carry out the data transmission to the active tag device during the second period after the first period elapsed. Thus, because data transmission is not carried out, simultaneously, from plural data reading writing apparatuses to the same active tag device, the interference of the radio wave is avoided and the efficiency of the communication is improved.

Furthermore, the first period may be variable. Thus, even when plural active tag devices exist, the interference of the radio wave hardly occurs.

Moreover, the aforementioned wireless communication unit may receive period determination data for determining the first period from the active tag device, and the controller may receive the period determination data from the wireless communication unit, and may determine the first period based on the period determination data. By doing so, even when the first period changes, the data transmission to the active tag device can be synchronized with the carrier sense by the active tag device.

Furthermore, the aforementioned controller may manage an association table in which a plurality of combinations of the period determination data and the first period are registered, and the controller may identify the first period associated with the received period determination data from the association table. By preparing the table in advance, it becomes possible to easily change the first period for each active tag device.

Furthermore, the aforementioned controller may calculate the first period from the received period determination data according to an operational expression for calculating the first period from the period determination data. It is possible to reduce a data holding amount than the table method.

An active tag device relating to a second aspect has a wireless communication unit to communicate with a data reading writing apparatus wirelessly; and a controller to cause the wireless communication unit to carry out data transmission at intervals of a first period, and to cause to start measurement of a second period set for determining a timing for causing the wireless communication unit to carry out carrier sense to detect data output by the data reading writing apparatus, synchronously with the data transmission, and to cause the wireless communication unit to carry out the carrier sense after the second period elapsed.

Bymeasuring the second period in this way, it is possible to synchronize with the data reading writing apparatus. In other words, it becomes unnecessary for the data reading writing apparatus to carry out useless data transmission, and the possibility that the interference of the radio wave occurs is decreased.

In addition, the aforementioned controller may cause the wireless communication unit to transmit period determination data for determining a timing of the data output by the data reading writing apparatus. Thus, it is possible for the data reading writing apparatus to identify a timing that the data transmission should be carried out.

Furthermore, the aforementioned controller may change the period determination data regularly or randomly. Thus, the possibility of the interference of the radio wave can be decreased.

Furthermore, the active tag device relating to the second aspect may further have a sensor. Then, when a period that an output of the sensor satisfies a first condition has passed a third period, a first period longer than an initial value may be set, and when the first period is longer than the initial value and the output of the sensor satisfies a second condition, the first period may return to an initial value. Thus, it is possible to detect a time band that it is not necessary to frequently carry out the data transmission and to prolong the data transmission interval.

Incidentally, the aforementioned sensor may be a sensor to detect movement of a holder or holding object of the active tag device. For example, while moving, the data transmission is carried out at normal intervals in order to notify the movement. However, when the movement is not made, it is possible to reduce the power consumption of the active tag device by decreasing the frequency.

Incidentally, it is possible to create a program causing a computer to execute the aforementioned processing, and such a program is stored in a computer readable storage medium or storage device such as a flexible disk, CD-ROM, DVD-ROM, magneto-optic disk, a semiconductor memory, and hard disk. In addition, the intermediate processing result is temporarily stored in a storage device such as a main memory or the like.

## Claims

1. A data reading writing apparatus for an active tag device, comprising:
a wireless communication unit to carry out wireless communication with an active tag device that is capable of carrying out data transmission and reception wirelessly; and
a controller to cause to start measurement of a first period set for synchronizing with carrier sense of the active tag device after the wireless communication unit detected reception of data from the active tag device, and to cause the wireless communication unit to carry out data transmission to the active tag device during a second period after the first period elapsed.

2. The data reading writing apparatus as set forth in claim 1, further comprising:
a reception strength measurement unit to measure reception strength of a wireless signal from the active tag device; and
a second communication unit to communicate with a host apparatus, and
wherein the controller transmits the reception strength to the host apparatus through the second communication unit, and
when data transmission is instructed based on the reception strength from the host apparatus, the controller causes the wireless communication unit to carry out the data transmission to the active tag device during the second period after the first period elapsed.

3. The data reading writing apparatus as set forth in claim 1, wherein the first period is variable.

4. The data reading writing apparatus as set forth in any one of claims 1 to 3, wherein the wireless communication unit receives period determination data for determining the first period from the active tag device, and the controller receives the period determination data from the wireless communication unit, and determines the first period based on the period determination data.

5. The data reading writing apparatus as set forth in claim 4, wherein the controller manages an association table in which a plurality of combinations of the period determination data and the first period are registered, and the controller identifies the first period associated with the received period determination data from the association table.

6. The data reading writing apparatus as set forth in claim 4, wherein the controller calculates the first period from the received period determination data according to an operational expression for calculating the first period from the period determination data.

7. An active tag device comprising:
a wireless communication unit to communicate with a data reading writing apparatus wirelessly; and
a controller to cause the wireless communication unit to carry out data transmission at intervals of a first period, and to cause to startmeasurement of a second period set for determining a timing for causing the wireless communication unit to carry out carrier sense to detect data output by the data reading writing apparatus, synchronously with the data transmission, and to cause the wireless communication unit to carry out the carrier sense after the second period elapsed.

8. The active tag device as set forth in claim 7, wherein the controller causes the wireless communication unit to transmit period determination data for determining a timing of the data output by the data reading writing apparatus.

9. The active tag device as set forth in claim 8, wherein the controller changes the period determination data regularly or randomly.

10. The active tag device as set forth in claim 7 or claim 8, further comprising a sensor, and
wherein, when a period that an output of the sensor satisfies a first condition has passed a third period, a first period longer than an initial value is set, and
when the first period is longer than the initial value and the output of the sensor satisfies a second condition, the first period returns to an initial value.

11. The active tag device as set forth in claim 10, wherein the sensor is a sensor to detect movement of a holder or holding object of the active tag device.

12. A system comprising:
an active tag device; and
a data reading writing apparatus for the active tag device,
wherein the active tag device comprises:
a wireless communication unit to communicate with the data reading writing apparatus wirelessly; and
a controller to cause the wireless communication unit to carry out data transmission at intervals of a first period, and to cause to start measurement of a second period set for determining a timing for causing the wireless communication unit to carry out carrier sense to detect data output by the data reading writing apparatus, synchronously with the data transmission, and to cause the wireless communication unit to carry out the carrier sense after the second period elapsed, and
the data reading writing apparatus comprises:
a second wireless communication unit to carry out wireless communication with the active tag device that is capable of carrying out data transmission and reception wirelessly; and
a second controller to cause to start measurement of the first period set for synchronizing with carrier sense of the active tag device after the wireless communication unit detected reception of data from the active tag device, and to cause the second wireless communication unit to carry out data transmission to the active tag device during the second period after the first period elapsed.

13. A program executed by a data reading writing apparatus having a wireless communication unit to carry out wireless communication with an active tag device that is capable of carrying out data transmission and reception wirelessly, wherein the program causes the data reading writing apparatus to execute a procedure comprising:
causing to start measurement of a first period set for synchronizing with carrier sense of the active tag device after the wireless communication unit detected reception of data from the active tag device; and
causing the wireless communication unit to carry out data transmission to the active tag device during a second period after the first period elapsed.

14. A program executed by an active tag device having a wireless communication unit that communicates with a data reading writing apparatus wirelessly, wherein the program causes the active tag device to execute a procedure comprising:
causing the wireless communication unit to carry out data transmission at intervals of a first period;
causing to start measurement of a second period set for determining a timing for causing the wireless communication unit to carry out carrier sense to detect data output by the data reading writing apparatus, synchronously with the data transmission; and
causing the wireless communication unit to carry out the carrier sense after the second period elapsed.
